# EUROPEAN PATENT SPECIFICATION

(11) **EP 0 502 077 B1**
(45) Date of publication and mention of the grant of the patent: **05.07.1995**
(21) Application number: 91900083.6
(22) Date of filing: 21.11.1990
(51) Int. Cl.: G11B 23/087

(54) **LIMITED USE VIDEO CASSETTE AND INTEGRAL MAILER**
VIDEOKASSETTE MIT BESCHRÄNKTEM GEBRAUCH UND INTEGRIERTER POSTSENDUNG
CASSETTE VIDEO D'USAGE LIMITE A EMBALLAGE D'EXPEDITION INTEGRE

(30) Priority: 22.11.1989 US 440217; 22.11.1989 US 440218
(43) Date of publication of application: 09.09.1992
(73) Proprietor: SHARBAR RESEARCH AND DEVELOPMENT, INC., Baltimore Maryland 21208 (US)
(72) Inventor: Klupt, Carle D., Baltimore, MD 21208 (US)
(74) Representative: Harris, Ian Richard
(86) International application number: US9006669
(87) International publication number: WO9107752

(56) References cited:
- EP-A- 0 285 384
- WO-A-88/02916
- US-A- 1 943 074
- US-A- 3 381 810
- US-A- 4 433 780
- US-A- 4 634 007
- US-A- 4 660 116
- US-A- 4 748 529
- US-A- 4 757 958
- US-A- 4 765 563
- US-A- 4 883 176
- US-A- 4 969 612

## Description

### Background of the Invention

The present invention relates generally to video cassettes, and more particularly to a limited use recording medium cartridge having a one-piece structure adapted to house the transport mechanism on which the recording medium is wound and unwound, for loading directly into a video cassette recorder (VCR). The cassette may also include an integral removable mailer.

Present-day video cassettes are generally composed of a rigid plastic case or housing in which a pair of reels or spools on which a magnetic recording tape is wound are mounted side by side for rotation in unison on spaced capstans or spindles constituting part of the drive mechanism of a VCR. A mechanical latching system is used in the cassette to hold the reels in position when not in use. The tape is transferred from one reel to the other to move laterally adjacent the head(s) of the VCR for recording or playback. Such cassettes or cartridges are relatively inexpensive to manufacture for most applications, where the tape is of sufficient length to record or have recorded thereon a presentation of at least about sixty minutes or more of viewing (or listening) time.

Where the tape is pre-recorded with only a short presentation, however, for the purpose of providing an advertising, sample, or preview presentation which may run only a few minutes in length, for demographic distribution, the cost of the plastic video cassette becomes prohibitive. Moreover, such short presentations are usually intended for only one or a few plays, not for repeated viewings. Hence, ideally, the cassette used for such purposes should be sufficiently inexpensive, both in terms of cost of materials and cost of manufacture, to render it virtually disposable in normal use. Also the materials used in the limited use cassette are lighter in weight than the conventional cassette and therefore, the cost of mailing the limited use cassette is lower than with the conventional cassette. This is in contrast, of course, with the conventional video cassette which, whether prerecorded or to be used for recording an event, is intended for repeated viewings (as well as possible erasures and re-recordings) over perhaps many years, and therefore is not intended to be disposable in normal use.

It is a principal object of the present invention to provide an inexpensive and easily fabricated limited use video cassette for recording and playback only a few times.

Another object of the present invention is to provide a video cassette which is sufficiently inexpensive to manufacture to render it disposable after limited use.

U.S. Patent 4,453,683 to Reimer et al. discloses a magnetic tape cassette arrangement in which the recording tape reels are mounted in a holder constructed of two or more pieces which may be composed partly of cardboard and are joined together to hold the reels. As described in that patent, the holder is constructed and configured to be used in conjunction with a separate, rigid, precision-made plastic housing into which it is inserted for loading the entire cassette arrangement into the recording machine for recording and playback therein.

Such prior art cassette arrangements are costly to manufacture, notwithstanding being constructed partially from cardboard, because of a multi-piece construction of the holder and the requirement of a separate, plastic, precision-made housing to be available for use of the overall structure in a recording machine.

It is a further object of the present invention to provide a cassette housing for a recording medium which is of one-piece construction and self-contained for loading directly in a record player.

It is also imperative that the cassette be protected during storage, handling and shipment. Typically, prior art cassettes are inserted into plastic cases or cardboard holders for protection during shipment, distribution and handling. For mailing or other shipment to end users, it is necessary to employ yet another outer wrapping or enclosure for addressing. Each additional case, holder, enclosure or wrapping adds another level of cost to the manufacture and handling by the producer, and to the weight, and therefore the shipping costs of the final product.

It is a further object of the present invention to provide a low-cost mailer for a video cassette.

It is another object of the present invention to provide an economical protecting enclosure which may be formed as part of a blank for a one-piece video cassette housing and to deliver printed material as part of the enclosure.

### Summary of the Invention

Briefly, according to the present invention which is defined in claim 1 and in the dependent claims, a low cost record cassette is provided for use in recording and playback in a recording machine. According to a principal aspect of the preferred embodiment of the invention, the housing for a video cassette is formed entirely from a blank comprising a single piece of self-supporting foldable sheet material such as paperboard folded along preformed fold lines to enclose a pair of reels, on which the recording tape is wound, positioned side-by-side for rotation between a pair of side panels of the paperboard housing. The side panels are separated by end panels of the paperboard housing, by a distance just sufficient to accommodate the reels for rotation. One of the side panels has cutouts to expose the internal drive mechanism of the reels, so that the cassette may be mounted on the mating drive mechanism of the VCR.

According to an important feature of the invention, the housing further includes tabs formed by folding out slitted portions of the paperboard along preformed fold lines to separate the reels from one another, and also to prevent them from shifting laterally, while enabling them to rotate freely within the paperboard housing. At least one of these tabs, after being folded to its separating position, forms a viewing hole in the paperboard housing for exposing the amount of recording tape remaining on a reel. If desired, before or after the reels are loaded into the housing and before it is closed, the reels may be further secured to prevent shifting during transit and storage by application of a low-tack adhesive to the internal surface of one of the side panels against which the reels rest. The adhesive is of insufficient strength to avoid being ruptured upon use of the cassette in a VCR, or to prevent any drag on the reels during play of the cassette.

One of the end panels has cutouts for passage of the recording tape therethrough and against its external surface as the tape is wound and unwound on the reels. According to another feature of the invention, that external surface is coated with a material having a lower coefficient of friction than other portions of the surface of the paperboard housing, to reduce drag of the recording tape as it is transferred from one reel to the other, particularly during rewinding of the tape.

Constructed in this manner, the housing is sufficiently economical to render the entire video cassette disposable after a single playback of a video recording thereon. Also, the reduced weight of the material used to make the cassette also reduces mailing costs for the advertiser. Although the preferred self- supporting foldable material used to form the cassette housing is paperboard and the term paperboard will be used to describe the invention herein, it should be understood that other thin blanks of self-supporting foldable materials such as corrugated board, low density plastic such as polyethylene and other fiber products such as pressboard may be used.

According to another important feature of the invention, the blank includes an appendage of the same single piece of self-supporting foldable material which is structured to form a protective wrapper or mailer for encompassing the housing and sealing thereto and to also provide a surface for advertising indicia. According to a further aspect of the invention, the appendage or mailer portion is adapted for ready manual removal from the housing after the cassette is received by the end user, by merely tearing it away along a perforated, scored, or thinner sectioned line of the sheet material at the point of its attachment to the housing. The mailer portion when detached becomes printed material, i.e. a coupon, educational material, pharmaceutical detail material, games, etc.

A preferred method for making such a self-contained limited life cassette according to the invention includes forming a thin one-piece blank of self-supporting foldable sheet material such as paperboard with fold lines, cutouts and slitted tab portions arranged and adapted to allow folding the paperboard into a complete housing for retaining the reels in juxtaposition for rotation therein. The paperboard is then partially folded to form two side panels and at least one end panel of the housing.

The reels are then inserted side by side between the side panels so that the internal drive mechanism of the reels is exposed at cutouts in one of the side panels, and the recording tape wound on one of the reels is threaded through cutouts in the end panel so that the strip of tape confronts and moves along the external surface of the end panel. The free end of the tape is then fastened to the other (empty) reel to be wound thereon during use of the cassette in a tape recording machine.

The housing is then completed by folding the paperboard at the remaining fold lines to securely retain the reels in place separated from one another while allowing them to rotate freely when loaded into and driven by the tape recording machine. The resulting end panels of the housing may be fastened together with an adhesive applied to their confronting surfaces or by use of lightweight adhesive tape. The end panels themselves and tabs associated with them are arranged and adapted to render the structure sufficiently rigid to prevent the corners from being crushed in normal handling, and the presence of the reels within the structure affords similar desirable rigidity to the sides of the cassette.

It is, therefore, another object of the present invention to provide a low cost record cassette having an entirely paperboard or other self-supporting foldable material housing of one-piece construction for rotatably mounting the transport mechanism of the recording medium.

A further object of the invention is to provide a method of manufacturing a disposable video cassette using a one-piece development paperboard as the housing for the cassette.

Yet another object of the invention is to provide a paperboard housing for a video cassette which is both self-contained for loading directly into a VCR, and sufficiently rigid to avoid damage to itself or its recording medium contents in normal handling.

Still another object of the invention is to provide a video cassette having a housing of one-piece construction and which is provided with fold down tabs that serve to separate and prevent lateral shifting of the reels in the housing.

In the modification of the preferred embodiment having the integral mailer, the end of the end panel which is opposite in the housing from the end panel at which the recording tape is exposed, is connected along a perforated line to an extended portion of the paperboard blank. This latter portion is of sufficient length and dimensions, and has fold lines, to allow it to be folded about the developed housing. In this manner, both side panels and the connecting end panel therebetween at which the recording tape is exposed are enclosed with a protective mailer which may then be sealed at the opposite end panel or, if desired, along an extended flap or lip against one of the mailer sides overlaying a side panel of the cassette housing.

Such a cassette is sufficiently economical to produce to make it attractive as disposable, pre-recorded, brief video presentation which may be an advertisement, preview or sampler, solely to promote the sale of another product or a longer video presentation. It is also economically and efficiently distributed, with its built-in mailer, to prospects in a demographically selected group, in the same manner that printed advertisements are distributed in the mails. The recipient need only unseal the mailer, tear it away along the perforations, and the remaining self-contained video cassette is ready for viewing. The detached mailer portion which contains information relative to the taped material is retained by the recipient for informational use.

Therefore, another object of the present invention is to provide a video cassette having a paperboard housing to render it disposable in normal use, and in which the housing has an integral removable mailer, in the form of a built-in container for mailing the cassette and separable therefrom to allow recording and/or playback of the cassette.

It is a further object of the present invention to provide a record medium cassette housing which is formed from a thin one-piece sheet of material and is self-contained for loading directly in a record player, and which has an integral wrapper for protecting the cassette during shipment and manually separable therefrom to permit use of the cassette as well as providing printed material to be read by the user.

The preferred method for making the self-contained disposable record cassette and integral mailer according to the present invention is essentially the same as previously discussed for the method of making the limited life cassette with the additional step of the remaining appendage of the blank is then folded about one side panel, the exposed tape end panel, the other side panel, and sealed to the housing or upon itself by a self-sealing adhesive applied to a flap at its free end or by a sealing tape. A printed address label may then be adhesively secured to an external side surface of the mailer, and the record cassette is ready for mailing.

It is, therefore, another object of the present invention to provide a method for making a low-cost record cassette with an integral mailer from a one-piece paperboard blank.

### Summary of the Drawings

The above and still further objects, features and attendant advantages of the present invention will become apparent from consideration of the following detailed description of the presently preferred embodiment of the invention, taken in conjunction with the accompanying drawings, in which:
FIG. 1 is a top view of the one-piece paperboard blank used to form the cassette housing according to the presently preferred embodiment of the invention;
FIGS. 2A, 2B and 2C are perspective views (FIGS. 2B and 2C being partially fragmented) of the cassette in various stages of the development, according to the preferred embodiment and manufacturing method;
FIGS. 3 and 4 are perspective views of the preferred embodiment of the cassette looking toward the top and bottom of the structure, respectively;
FIG. 5 is a perspective view of a reel lock used to secure the cassette reels for shipping;
FIG. 6 is a top view of the one-piece paperboard blank to form the cassette housing and mailer according to a further preferred embodiment of the invention; and
FIGS. 7 and 8 are perspective views of the further preferred embodiment of the cassette and appended mailer looking toward the top and bottom of the housing, respectively.

### Detailed Description of the Preferred Embodiments

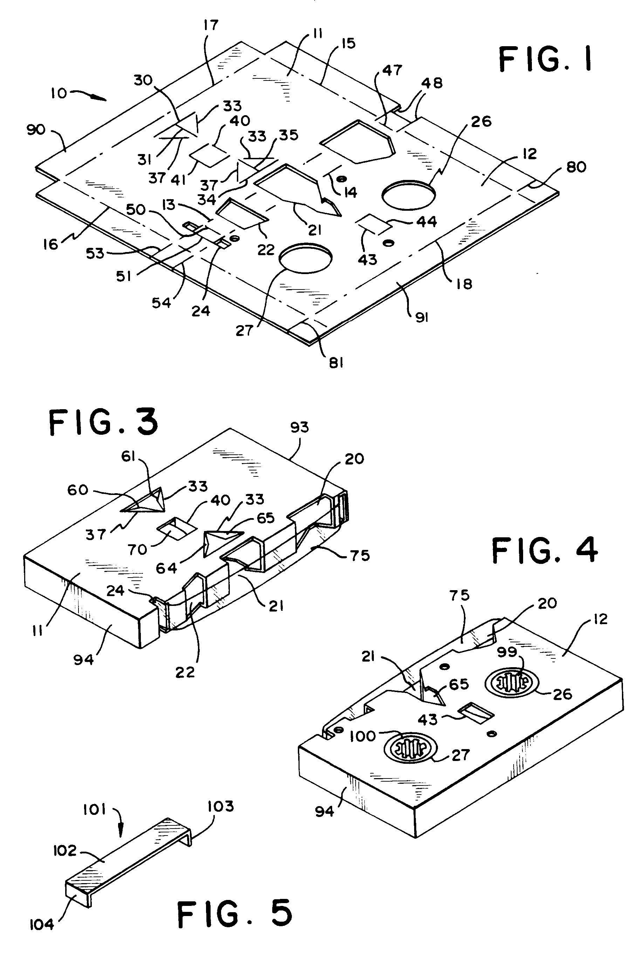

Referring now to the drawings, and initially to FIG. 1, a presently preferred embodiment of a video cassette according to the invention includes a housing of one-piece construction. As will be seen from the ensuing Figures of drawing and accompanying text, the housing is arranged and adapted to be developed for rotatably mounting a pair of reels for a recording tape in juxtaposition therein, to allow transfer of the tape from one reel to the other in passage across the recording or playback heads as the reels undergo rotation in unison when the cassette is operating in a video cassette recorder (VCR, not shown).

In its initial state, the housing is a flat piece self-supporting rigid material preferably of development cardboard or paperboard 10 which may be stamped or punched from 16 point or 20 point paperboard stock, for example. The stock may be of any desired color or may be printed with an advertising message or pattern on the surface which will become the external surface of the housing, this being the top surface as viewed in FIG. 1. In the punching process, plural cutouts, fold lines and slits are provided in the paperboard 10 for purposes which will be discussed presently.

In particular, the punching defines two side panels 11 and 12 by means of indentation lines or fold lines 13, 14, 15, 16, 17 and 18. Fold lines 13 and 14 define a first end panel between the two side panels 11 and 12. Fold lines 15 and 16 define opposite ends of the side panels and also opposite end panel portions of second and third end panels of the housing. Fold lines 17 and 18 define portions of the fourth and final end panel of the housing. All folds, including those to be mentioned in the subsequent description herein, are made downwardly as viewed in FIG.1.

The developmental paperboard 10 is also provided with a set of cutouts or punchouts some of which are configured to accommodate loading the ultimate cassette into a VCR, and others for use in conjunction with reels of recording tape to be mounted in the housing. The former include cutouts 20, 21 and 22. Cutout 24 is intended, together with associated slits and fold line to be described, to allow passage of the tape from the interior to the exterior of the housing. Cutouts 26 and 27 are provided to expose the interior of the hubs which form the drive mechanism of the reels for the recording tape.

Disposed along the central axis of substantial symmetry through the two side panels 11 and 12 are several slitted regions and associated fold lines, configured to form tabs for separating the two reels to be housed in the paperboard housing, and for preventing lateral shifting of the reels within the housing. Specifically, two triangular regions in side panel 11 include slits 30, 31 and 34, 35, and fold lines 33 and 37. Each of these triangular regions, when forced downward along the fold lines,; forms a pair of triangular tabs positioned to accommodate the circular shape of the reels and to hold them against lateral shifting in the housing.

Another pair of tabs, rectangular in shape and ultimately used for separating the two reels, is formed by fold lines 40 and 43 along the aforementioned axis, in side panels 11 and 12, respectively, and by slits for the other three sides of each as indicated at 41 and 44. When the folding is completed to develop the housing, these two rectangular tabs will be disposed against one another and define the central axis separating the two enclosures for the reels within the housing.

It will be observed that the end panel formed by fold lines 13 and 14 has at one of its ends a fold line 47 which is offset inwardly of the periphery of the paperboard from the fold line 15, and slits 48 extending from fold line 47 to the periphery along foldlines 13 and 14. When the thus formed rectangular tab is folded downward, and the housing is ultimately completed, a slot is formed at the offset portion to admit the recording tape at one end of this end panel. As previously mentioned, the cutout 24 near the other end of this end panel, together with an associated fold line 50 and slit 51, provide a corresponding function (to admit the tape) at the other end. For that purpose, the tab formed by the slit, fold line and cutout is folded downward to open a slot for the tape. Thus, the tape may be threaded from the interior to the exterior of the housing and back to the interior, through the slots formed at either end of this end panel. Moreover, the fold line of each of the tabs at these slots provides a smooth surface on which the tape rides as it is transferred from one reel to the other during recording or playback of the cassette.

Slits 53 and 54 extending from fold line 16 along fold lines 13 and 14 to the periphery of the paperboard 10 define a tab which, when the development is completed, serves to enhance the rigidity at a corner of the housing. A similar function is provided for two other corners of the housing by the tabs formed by slits 80 and 81 extending from fold lines 15 and 16, respectively, along fold line 18 to the periphery of the paperboard 10. At the opposite end of the paperboard, the regions corresponding to these tabs, at the intersection of foldlines 15 and 17 and of 16 and 17, are simply removed because when all of the folds or bends are made to complete the housing the latter two tabs are positioned at those intersections (which are then corners of the housing).

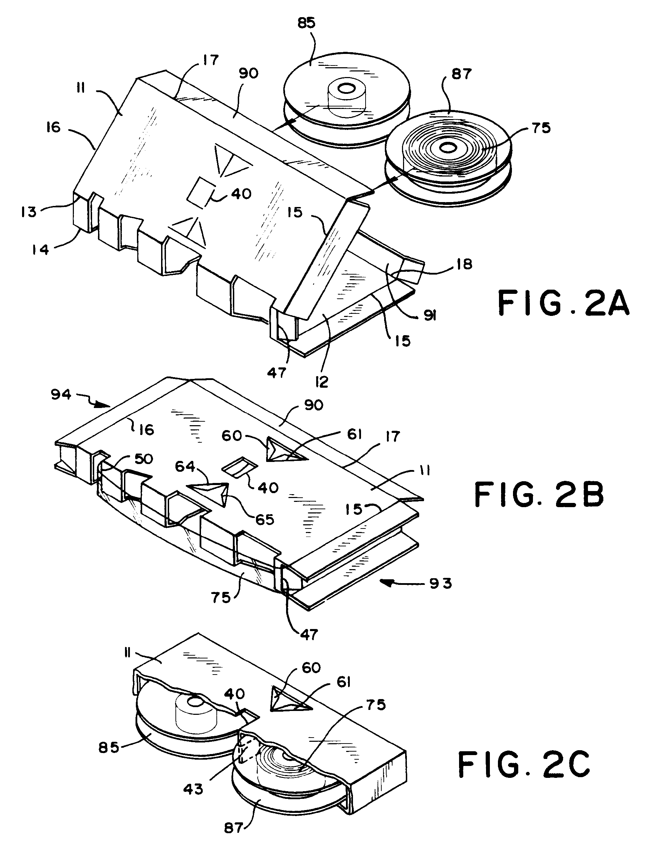

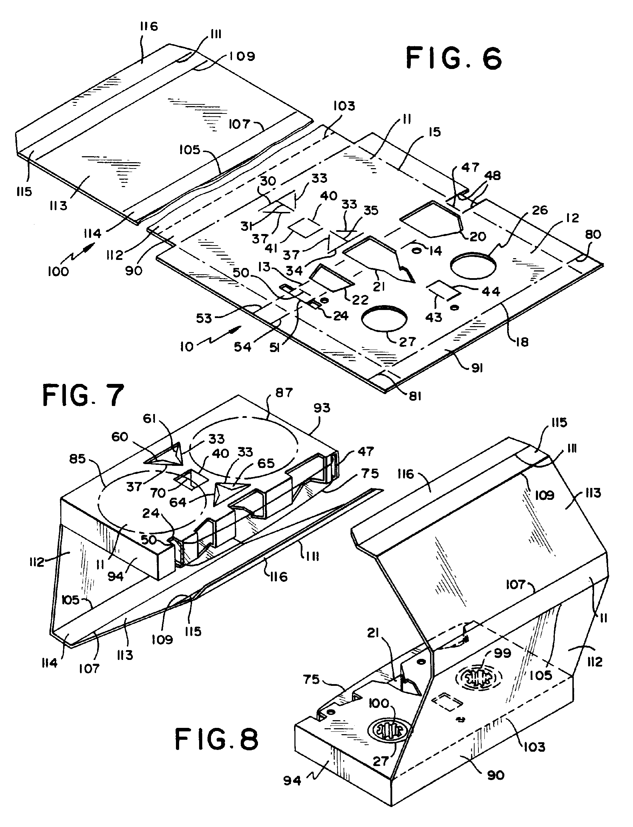

The process for forming the housing for the video cassette will be more clearly understood by further reference to the developmental stages depicted in FIGS. 2A, 2B and 2C, as well as the completed housing shown in top and bottom views in FIGS. 3 and 4, respectively. Initially, paperboard 10 is bent or folded along parallel fold lines 13 and 14 to begin the general definition of the housing with side panels 11 and 12 and the connecting end panel containing the cutouts and tape slots. Folds are also made along fold lines 15, 16, 17, 18, 47 and 50 to generally shape the strips which will form the other end panels and to form the rigidizing tabs at three of the corners, and the two tape slots at opposite ends of the connecting end panel. The pair of separator tabs generally disposed in the center of the side panels are then folded inwardly of the housing at fold lines 40 and 43.

A pair of reels 85 and 87, one having a recording tape 75 wound thereon, are then inserted into the space between the side panels 11 and 12 so that the reels are juxtaposed with the separator tabs therebetween. The free end of the recording tape is then threaded through the slots in the connecting end panel so that the tape 75 rides against the folds 47 and 50 and associated tabs, and the external surface of the connecting end panel. To prevent drag along those surfaces as the tape is transferred from one reel to the other in rewind of the cassette, the entire external surface of the connecting end panel is coated with a low friction varnish or Teflon (DuPont Company trademark) tape, preferably before actual development of the housing is commenced. This procedure provides that surface with a lower coefficient of friction than the other exposed surfaces of the housing.

After passage of the free end of the tape through the two slots in the connecting end panel, it is fastened to the hub of the empty reel 85. It will be apparent then, that upon rotation of the empty reel during play of the cassette, the tape will be wound thereon as it unwinds from the other reel 87.

Next, the free ends of the side panels are fully bent along fold lines 17 and 18 parallel to the two fold lines 13 and 14, to form strips 90 and 91 which will abut one another to form a second end panel opposite the connecting end panel. The two strips may be bonded together by use of a self sealing adhesive which is applied to the abutting surfaces thereof after the development paperboard is stamped out, or by gluing at the time they are to be joined, or by use of an adhesive tape after they are brought together. By closing this second end panel, reels 85 and 87 are now partially secured in their respective enclosures within the housing.

The pair of tabs at either end of strip 91 are then folded inwardly along fold lines 15 and 16 and inserted normal to the second end panel. Then the third and fourth end panels 93 and 94 of the housing are formed by bending opposite ends of each of the side panels 11 and 12 inwardly along fold lines 15 and 16 on each side panel, after each of the rigidizing tabs has been tucked in at the corners of the structure. The respective pairs of abutting strips that form those end panels may now be fastened together in the same manner as was described above for the second end panel. This completes the six-sided housing enclosing the pair of reels 85 and 87, to form the video cassette.

The triangular tabs 60, 61 and 64, 65 provided in side panel 11 are then bent inwardly of the housing along fold lines 33 and 34, to retain the reels in place against lateral shifting while allowing them freedom to rotate within the housing. The rectangular tabs formed along fold lines 40 and 43 abut against one another in the housing and serve as retaining tabs to separate the reels to prevent them from binding against each other during rotation. One of these retaining tabs forms a hole 70 (FIG. 3) in the housing along a transparent flange of a reel, to permit viewing the extent of tape remaining on that reel.

The circular cutouts 26 and 27 in side panel 12 forming the base of the housing are slightly larger than the internal slotted surface of the hole in the hubs 99 and 100 of reels 87 and 85 (FIG. 4). Hence, when the reels are mounted within the housing, the drive mechanism of the reels constituted by the slotted holes is exposed for mounting on the mating drive mechanism of the VCR when the video cassette is loaded into a VCR. The reels may be further secured in the housing by application of a low-tack adhesive to the internal surface of a side panel against which they rest, to prevent movement thereof during storage, handling and insertion. Such adhesive should be of sufficiently low adherence so that the reels are easily lifted by the VCR mechanism. Although not shown, the adhesive can alternately be placed on one or both reels. During mailing or shipping of the cassette a reel lock 101 as seen in FIG. 5 is used to maintain the reels 85 and 87 in a fixed position. The reel lock 101 comprises a longitudinal planar section 102 having a length equal to the spacing of the reels 85 and 87 and a pair of downwardly depending tabs 103, 104 adopted to fit within opposing slots in hubs 99 and 100 respectively.

The preferred use of a video cassette according to the present invention is for advertising or preview showings for distribution to demographically determined groups of prospective viewers. Of course, this is not intended as a limitation, but for such purposes the cassette would be prerecorded for playback only. For other purposes, it would be desirable to allow recording as well as playback of the cassette.

From the foregoing description, it will be seen that the present invention provides a video cassette, and in particular a housing for a video cassette, which is sufficiently economical in both materials and fabrication process to render the entire video cassette disposable after a single playback of a video recording thereon.

In the modification of the preferred embodiment relating to the integral mailer, reference should now be made to FIGS. 7, 8 and 9 which show the cassette and integral mailer. As shown in FIG. 7, a second portion or section 10a is affixed to previously described cassette portion 10 and is also provided with fold lines, and is employed to form the mailer for the video or record cassette as will be described in detail below.

Section 10a of blank 10 is appended to the cassette housing portion 10 along a line of attachment 103 at strip 90 (FIG. 7). The line of attachment is itself a fold line, preferably perforated through the paperboard. Section 10a includes other fold lines 105, 107, 109 and 111 defining side panels 112 and 113, connecting end panel 114 and opposite end panel 115, and flap 116 of the mailer or protective wrapper for the cassette. The side panels and end panels of the mailer are of the same length as strip 90 (and as the side panels 11 and 12 and their interconnecting end panel of the housing), but are slightly wider than those counterparts, just sufficiently to be wrapped around them.

Section 10a may thus be folded along fold lines 103, 105, 107, 109, and 111 to encompass side panel 12, connecting (exposed tape) end panel, side panel 11, and the opposite end panel formed by strips 90, 91 of the housing with its side panel 112, end panel 114, side panel 113, and end panel 115, respectively. Preferably, the underside of flap 116 is partly coated with a self-sealing adhesive, although other means such as adhesive tape may be used, to secure the mailer in place about the housing. Finally, a printed address label may then be adhesively secured to the outside of either side panel 112, 113 of the mailer, and the video cassette is then ready for postage and mailing.

The recipient of the cassette/mailer may readily remove the mailer portion for reading of the advertising material thereon by tearing it away along the perforation line 103 to leave a relatively clean edge thereat on the cassette. The cassette may then be loaded directly into a VCR for viewing the recorded video on an associated television set.

As noted earlier herein, the preferred use of a video cassette shipped with the integral mailer according to the present invention is for advertising or preview showings for distribution to demographically selected groups of prospective viewers. This is not intended as a limitation, but for such purposes the cassette would be pre-recorded for playback only. It will be seen that the present invention provides a video cassette, and in particular a housing and built-in removable mailer for a video cassette, which is sufficiently economical in both materials and fabrication process to allow low-cost shipping of the cassette as well as providing printed material and to render the entire cassette disposable after a single playback of video recording thereon, if so desired although numerous additional plays may be obtained.

Although presently preferred embodiments and processes of the invention have been disclosed herein, it will be apparent to those skilled in the art to which the present invention pertains that variations and modifications of the described illustrative embodiment and process may be made. For example, the principles and the invention may be applied to record cassettes other than video cassettes, and although the term "mailer" is used in the description and claims it will be understood to be used in its broader sense of a container for the cassette, preferably for shipping but which provides an informational function as well. It is therefore intended that the invention shall be limited only by the appended claims and the rules and principles of applicable law.

## Claims

1. A video cassette comprising a housing in which are rotatably mounted a pair of reels (85, 87) carrying a recording tape (75) extending from one reel to the other and transferable from one reel to the other as they are rotated in unison when the cassette is operating in a video cassette recorder (VCR), characterised in that the housing is constructed from a single flat piece of development cardboard (10) having a plurality of cut-outs and fold lines (13-81) preformed therein for formation of the single piece of cardboard into a self-contained housing for said reels, said cut-outs and fold lines providing a pair of drive cut-outs (26, 27) spaced apart one from the other to expose the respective rotational driving mechanisms (99, 100) of said pair of reels and providing access to those mechanisms by the driving mechanism of the VCR, when the cassette is loaded therein, and a cut-out or cut-outs (24, 48) permitting the record/playback head of the VCR to access the tape (75) as it is transferred by said drive mechanism from one reel to the other.

2. A video cassette according to claim 1, characterised in that the cut-outs and fold lines further provide at least one pair of retaining tabs (33, 37) folded inwardly into the cassette housing and serving to hold the reels (85, 87) in their respective positions within the cassette housing, whilst permitting said reels to rotate freely therein.

3. A video cassette according to claim 1 or 2, characterised in that the cut-outs and fold lines provide at least one viewing hole (40) in the housing and which exposes the amount of recording tape wound on at least one of the reels.

4. A video cassette according to any one of claims 1 to 3, characterised in that the cut-outs and fold lines provide two spaced apart apertures (24, 48) providing exit and entry points for the tape (75) to and from the housing as it is transferred from one reel to the other, the tape (75) thus travelling over an external surface of the housing between those apertures for access by the record/playback head of the VCR when the cassette is operating therein.

5. A video cassette according to claim 4, characterised in that the external surface of the cardboard housing between the tape exit and entry apertures (24, 48) and across which the tape travels from one reel to the other is provided with a friction reducing coating.

6. A video cassette according to any one of the preceding claims, characterised in that one or both reels (85, 87) are temporarily secured against rotation within the housing by means of a weak adhesive applied therebetween, that weak adhesive bond being rupturable by the drive force applied to the reel or reels by the VCR drive mechanism when the cassette is operating in the VCR.

7. A video cassette according to any one of the preceding claims, characterised in that, for temporary transportation purposes, a removable locking member (101) is provided which is engageable through said drive cut-outs (26, 27) with the drive mechanism of either or both reels (85, 87) thereby mechanically locking either or both reels and temporarily preventing the rotation of either or both reels within the cassette housing.

8. A video cassette according to claim 7, characterised in that the locking member (101) comprises a cardboard strip (102) with integral downturned ends (103, 104) engageable with the drive mechanisms of the two reels (85, 87) through the drive cut-outs (26, 27) in the housing.

9. A video cassette according to any one of the preceding claims, wherein the one piece cardboard housing is provided with a tear-off mailing flap (100) integrally formed with the rest of the housing from said single piece of cardboard.

10. A video cassette according to claim 9, wherein said tear-off mailing flap (100) is initially foldable across and in contact with one face of the cardboard housing and secured in that position by means of an integrally formed adhesive tab (116) on the mailing flap (100).

11. A one piece cardboard blank provided with preformed cut-outs and fold lines and assembleable into a one piece cardboard video cassette housing as required by any one of claims 1 to 10.

## Patentansprüche

1. Videokassette mit einem Gehäuse, in welchem ein Spulenpaar (85, 87) rotierbar befestigt ist, das ein Aufnahmeband (75) trägt, das sich von einer Spule zu der anderen erstreckt und von einer Spule auf die andere übertragbar ist, wenn sie bei Betrieb der Kassette in einem Videokassettenrekorder (VKR) übereinstimmend rotiert werden, **dadurch gekennzeichnet**, daß das Gehäuse aus einem einzelnen, flachen Stück Entwicklungspappkarton (10) mit mehreren darin vorgeformten Ausschnitten und Faltlinien (13-81) zur Bildung des einzelnen Pappkartonstückes zu einem selbsttragenden Gehäuse für diese Spulen geformt wird, wobei diese Ausschnitte und Faltlinien ein Paar in Abstand voneinander befindliche Antriebsausschnitte (26, 27), um die jeweiligen rotierenden Antriebsmechanismen (99, 100) dieses Spulenpaares freizulegen und Zugriff auf diese Mechanismen durch die Antriebsmechanismen des VKR zu gewähren, wenn die Kassette in diesen eingeschoben wird, und einen Ausschnitt oder Ausschnitte (24, 48), die es dem Aufnahme-/Abspielkopf des VKR erlauben, Zugang zu dem Band (75) zu haben, wenn es durch die Antriebsmechanismen von einer Spule auf die andere übertragen wird, liefern.

2. Videokassette nach Anspruch 1, **dadurch gekennzeichnet,** daß die Ausschnitte und Faltlinien weiterhin zumindest ein Paar Rückhaltelappen (33, 37) schaffen, die nach innen in das Kassettengehäuse gefaltet sind und dazu dienen, die Spulen (85, 87) in ihren jeweiligen Positionen innerhalb des Kassettengehäuses zurückzuhalten, während sie es diesen Spulen erlauben, darin frei zu rotieren.

3. Videokassette nach Anspruch 1 oder 2, **dadurch gekennzeichnet**, daß die Ausschnitte und Faltlinien zumindest ein Guckloch (40) in dem Gehäuse schaffen, welches die Menge des mindestens auf eine de Spulen gewickelten Aufnahmebandes freilegt.

4. Videokassette nach einem der Ansprüche 1 bis 3, **dadurch gekennzeichnet,** daß die Ausschnitte und Faltlinien zwei voneinander entfernte Öffnungen (24, 48) schaffen, die Ausgangs- und Eingangspunkte für das Band zu und von dem Gehäuse schaffen, wenn es von einer Spule auf die andere übertragen wird, wobei das Band (75) auf diese Weise über eine äußere Oberfläche des Gehäuses zwischen diesen Öffnungen für den Zugang des Aufnahme-/Abspielkopfes des VKR hinüberläuft, wenn die Kassette darin betrieben wird.

5. Videokassette nach Anspruch 4, **dadurch gekennzeichnet,** daß die äußere Oberfläche des Pappkartongehäuses zwischen den Bandausgangs- und eingangsöffnungen (24, 48), über welches das Band von einer Spule zu der anderen läuft, mit einem reibungsmindernden Überzug versehen ist.

6. Videokassette nach einem der vorhergehenden Ansprüche, **dadurch gekennzeichnet**, daß eine oder beide Spulen (85, 87) innerhalb des Gehäuses vorübergehend gegen Rotation mittels eines dazwischen aufgebrachten schwachen Klebstoffs gesichert sind, wobei dieser schwache Klebstoff dann, wenn die Kassette in einem VKR betrieben wird, durch die auf die Spule oder Spulen ausgeübte Antriebskraft reißbar ist.

7. Videokassette nach einem der vorhergehenden Ansprüche, **dadurch gekennzeichnet**, daß für vorübergehende Transportzwecke ein entfernbares Verriegelungsteil (101) geschaffen ist, welches durch die Antriebsausschnitte (26, 27) mit dem Antriebsmechanismus von einer oder beiden Spulen (85, 87) in Eingriff bringbar ist, wodurch es eine oder beide Spule mechanisch blockiert und vorübergehend die Rotation von einer oder beiden Spulen innerhalb des Kassettengehäuses verhindert.

8. Videokassette nach Anspruch 7, **dadurch gekennzeichnet,** daß das Verriegelungsteil (101) einen Pappkartonstreifen (102) mit integrierten nach unten gerichteten Enden (103, 104) umfaßt, die mit den Antriebsmechanismen der beiden Spulen (85, 87) durch die Antriebsausschnitte (26, 27) in dem Gehäuse in Eingriff bringbar sind.

9. Videokassette nach einem der vorhergehenden Ansprüche, bei welcher das einteilige Pappkartongehäuse mit einer Abriß-Versandklappe (100) versehen ist, die integriert mit dem Rest des Gehäuses aus dem einzelnen Stück Pappkarton gebildet ist.

10. Videokassette nach Anspruch 9, bei welcher diese Abriß-Versandklappe (100) anfangs über und in Kontakt mit einer Fläche des Pappkartongehäuses faltbar ist und in dieser Position mittels eines integriert gebildeten Klebelappens (116) auf der Versandklappe (100) befestigt ist.

11. Einteiliger Kartonzuschnitt, der mit vorgeformten Ausschnitten und Faltlinien versehen ist und in ein einteiliges Karton-Viedeokassettengehäuse, wie es durch einen der Ansprüche 1 bis 10 erfordert wird, zusammenbaubar ist.

## Revendications

1. Cassette vidéo comprenant un boîtier dans lequel sont montées mobiles en rotation de bobines (85, 87) portant une bande d'enregistrement (75) s'étendant d'une bobine à l'autre et pouvant défiler d'une bobine à l'autre lorsqu'elles sont entraînées en rotation à l'unisson, lorsque la cassette est en fonctionnement dans un magnétoscope à cassette (VCR), caractérisée en ce que le boîtier est construit à partir d'une pièce plate unique de carton à plier (10) comportant plusieurs découpes et plusieurs lignes de pliage (13 à 81), qui y sont préformées, pour donner à la pièce unique de carton la forme d'un boîtier autonome pour lesdites bobines, lesdites découpes et lignes de pliage réalisant une paire de découpes d'entraînement (26, 27) écartées l'une de l'autre pour faire apparaître les mécanismes d'entraînement en rotation (99, 100) respectifs desdites deux bobines et pour permettre au mécanisme d'entraînement du VCR d'accéder à ces mécanismes, lorsque la cassette est chargée dans le VCR, et une découpe ou des découpes (24, 48) permettant à la tête d'enregistrement/lecture du VCR d'accéder à la bande 75 lorsqu'elle est transférée d'une bobine à l'autre à l'aide dudit mécanisme d'enregistrement.

2. Cassette vidéo selon la revendication 1, caractérisée en ce que les découpes et les lignes de pliage réalisent, en outre, au moins une paire de pattes de maintien (33, 37) repliées vers l'intérieur dans le boîtier de cassette et servant à maintenir les bobines (85, 87) dans leur position respective à l'intérieur du boîtier de cassette, tout en permettant auxdites bobines d'y tourner librement.

3. Cassette vidéo selon la revendication 1 ou 2, caractérisée en ce que les découpes et les lignes de pliage réalisent au moins un trou de visualisation (40) dans le boîtier, qui permet de voir la quantité de bande d'enregistrement bobinée sur au moins l'une des bobines.

4. Cassette vidéo selon l'une quelconque des revendications 1 à 3, caractérisée en ce que les découpes et les lignes de pliage réalisent deux ouvertures écartées (24, 48) créant des points d'entrée et de sortie pour la bande (75) vers le boîtier et hors de celui-ci lorsqu'elle est transférée d'une bobine à l'autre, la bande (75) défilant ainsi sur la face externe du boîtier entre ces ouvertures pour que la tête d'enregistrement/lecture du VCR y accède lorsque la cassette est en fonctionnement dans celui-ci.

5. Cassette vidéo selon la revendication 4, caractérisée en ce que la face externe du boîtier en carton entre les ouvertures de sortie et d'entrée de bande (24, 48) et sur laquelle la bande défile d'une bobine à l'autre est munie d'un revêtement réduisant le frottement.

6. Cassette vidéo selon l'une quelconque des revendications précédentes, caractérisée en qu'une ou les deux bobines (85, 87) sont bloquées temporairement en rotation à l'intérieur du boîtier au moyen d'une colle faible appliquée entre eux, cette liaison par colle faible pouvant être rompue par la force d'entraînement appliquée à la bobine, ou aux bobines, par le mécanisme d'entraînement de VCR lorsque la cassette est en fonctionnement dans le VCR.

7. Cassette vidéo selon l'une quelconque des revendications précédentes, caractérisée en ce que, dans un but de transport temporaire, il est prévu un élément de verrouillage amovible (101) qui peut bloquer, à travers lesdites découpes d'entraînement (26, 27), le mécanisme d'entraînement de l'une ou l'autre, ou des deux, bobines (85, 87) en verrouillant ainsi mécaniquement l'une ou l'autre, ou les deux, bobines et en empêchant temporairement la rotation de l'une ou l'autre, ou des deux, bobines à l'intérieur du boîtier de cassette.

8. Cassette vidéo selon la revendication 7, caractérisée en ce que l'élément de verrouillage (101) comprend une bande de carton (102) avec des extrémités d'un seul tenant retournées vers le bas (103, 104) pouvant bloquer le mécanisme d'entraînement des deux bobines (85, 87) à travers les découpes d'entraînement (26, 27) du boîtier.

9. Cassette vidéo selon l'une quelconque des revendications précédentes, dans laquelle le boîtier en carton d'une seule pièce est pourvu d'un volet d'expédition postale détachable (100), formé d'un seul tenant avec le reste du boîtier à partir de ladite unique pièce de carton.

10. Cassette vidéo selon la revendication 9, dans laquelle ledit volet d'expédition postale détachable (100) est initialement repliable sur et en contact avec une face du boîtier en carton, et est fixé dans cette position au moyen d'une patte adhésive (116) formée d'un seul tenant sur le volet d'expédition postale (100).

11. Flan en carton d'une seule pièce avec des découpes et des lignes de pliage préformées et pouvant être assemblé en un boîtier de cassette vidéo en carton d'une seule pièce comme requis par l'une quelconque des revendications 1 à 10.
